# EUROPÄISCHE PATENTSCHRIFT

(11) **EP 1 133 351 B1**
(45) Veröffentlichungstag und Bekanntmachung des Hinweises auf die Patenterteilung: **03.03.2004**
(21) Anmeldenummer: 99949002.2
(22) Anmeldetag: 15.10.1999
(51) Int. Cl.: B01J 8/24, B01J 8/00, B01J 8/18

(54) **WIRBELSCHICHTVERFAHREN UND REAKTOR ZUR BEHANDLUNG VON KATALYSATOREN UND KATALYSATORTRÄGERN**
FLUIDIZED BED METHOD AND REACTOR FOR THE TREATMENT OF CATALYSTS AND CATALYST CARRIERS
PROCEDE A LIT FLUIDISE ET REACTEUR POUR LE TRAITEMENT DE CATALYSEURS ET DE SUPPORTS DE CATALYSEURS

(30) Priorität: 15.10.1998 DE 19847647
(43) Veröffentlichungstag der Anmeldung: 19.09.2001
(73) Patentinhaber: Basell Polyolefine GmbH, 50389 Wesseling (DE)
(72) Erfinder: DE LANGE, Paulus, D-67117 Limburgerhof (DE); SCHÖNFELDER, Hendrik, D-68159 Mannheim (DE); KÄMMERER, Michael, D-67071 Ludwigshafen (DE); SIEBENHANDL, Hans, Werner, D-53913 Swisttal (DE); EVERTZ, Kaspar, D-67105 Schifferstadt (DE); WIETFELDT-HALTENHOFF, Stefan, D-50374 Erftstadt (DE); WERTHER, Joachim, D-21244 Buchholz (DE)
(86) Internationale Anmeldenummer: PCT/EP1999/007837
(87) Internationale Veröffentlichungsnummer: WO 2000/021655

(56) Entgegenhaltungen:
- EP-A- 0 101 893
- US-A- 4 038 038
- US-A- 4 197 418
- US-A- 4 229 608
- US-A- 4 518 750

## Beschreibung

Die Erfindung betrifft ein Wirbelschichtverfahren, einen Reaktor zur Behandlung von Katalysatoren und Katalysatorträgern und die Verwendung der Verfahrensprodukte bei der Polyolefinherstellung.

Wenn auf perforieren Böden lagerndes feinkörniges Schüttgut von unten von Gasen durchströmt wird, stellt sich unter bestimmten Strömungsbedingungen ein Zustand ein, der dem einer kochenden Flüssigkeit ähnelt - die Schicht wirft Blasen auf, und die Teilchen des Schüttgutes befinden sich innerhalb der Schicht in einer ständigen, wirbelnden Auf- und Abbewegung und bleiben so gewissermaßen in der Schwebe. Man spricht in diesem Zusammenhang auch von Fließbett, Wirbelbett oder Wirbelschicht. Ein solcher Zustand entsteht, wenn ein bestimmter Grenzwert der Geschwindigkeit des von unten durchströmenden Gases gegen die Schwerkraft des Festteilchen erreicht wird. Dieser Punkt, an dem die ruhende in eine wirbelnde Schicht, das Festbett in eine Wirbelschicht übergeht, wird als Lockerungs- oder Wirbelpunkt bezeichnet. Das Erreichen dieses Punktes hängt von einer Reihe physikalischer Faktoren ab; diese sind z.B. Dichte, Größe, Verteilung und Form der Teilchen und Eigenschaften des Wirbelfluids.

Die Wirbelschicht kann wie eine Flüssigkeit durch Öffnungen ausströmen, durch Rohre befördert werden, oder auf geneigter Unterlage, z.B. einer Förderrinne, abfließen. Bei weiterer Erhöhung der Geschwindigkeit des Wirbelfluids expandiert die Schicht immer stärker und es bilden sich Blasen. Oberhalb einer Grenzgeschwindigkeit werden die Teilchen als Flugstaub aus dem Behälter hinausgetragen, können aber in einem nachgeschalteten Abscheideorgan wieder vom Gasstrom separiert und dem Reaktor zugeführt werden.

Ein zweckmäßiges Abscheideorgan ist ein sogenannter Zyklon. Bei einem solchen Zyklon erfolgt die Abscheidung der Partikeln mit Hilfe der Zentrifugalkraft. Zyklone bestehen im Prinzip aus einem zylindrischen Gefäß mit konisch zulaufendem Boden, in das im oberen Bereich ein Staubluft-Eintrittsrohr tangential und ein Reinluft-Austrittsrohr vertikal hineinragen. Der tangential eintretende Gas/Staub-Strom induziert eine Wirbelströmung, wobei die gröberen Staubteilchen durch die Zentrifugalkraft an die Wand des Zylinders geschleudert werden und von dort durch die Schwerkraft zu Boden sinken, von wo sie ausgetragen werden können. Der kreisende, vom Staub befreite Gaswirbel kehrt am Boden des Zyklons seine Richtung um und verläßt den Zyklon nach oben durch das Austrittsrohr zusammen mit eventuell feineren Partikeln, denn das Trennprinzip reicht nicht aus, um Feinstaub-Verunreinigungen vollständig zu beseitigen. Zyklone werden in der Technik vorwiegend zur Entstaubung eingesetzt.

Zyklone sind bei vielen Wirbelschichtverfahren eine wichtige Komponente. Wirbelschichtverfahren werden für eine große Anzahl von technischen Prozessen angewendet. Dabei kann der Feststoff der Wirbelschicht z.B. entweder als Katalysator (Fließbett-Katalysator) oder als Wärmeübertragungsmittel wirken, oder dieser kann selbst an der Reaktion teilnehmen. Wichtige Prozesse, die als Wirbelschichtverfahren ausgeführt werden sind:

Gasphasenpolymerisation, Kohleverbrennung, Kohleverflüssigung und Fischer-Tropsch-Synthese, katalytisches Cracken von Kohlenwasserstoffen, Rösten sulfidischer Erze, Kalzinieren von Tonerdehydrat, Kalkbrennen, Entschwefelung von Gasen, katalytische Dehydrierung benzinreicher Naphten-Fraktionen, Destillation von Öl aus bituminösem Sand, Oxidation von Naphthalin zu Phthalsäureanhydrid an Vanadiumoxid, Beseitigung von Fluor bei der Phosphat-Gewinnung, Herstellung von Acrylnitril, Dichlorethan, CCl₄, TiCl₄, Trocknung von Braunkohle und Granulaten (z.B. aus PVC, Salpeter, Kalisalzen, Holzmehl, Kochsalz, Farben, pharmazeutischen Präparaten, Insektiziden, selbst Mikroorganismen), aromaschonende Trocknung oder Röstung von Nahrungs- und Genußmitteln (Bohnenkaffee, Kakao, Erdnüssen, Getreideprodukten, Maisstärke, Reis, Tee und vielen anderen), die Verbrennung von Abfällen, Müll, Sondermüll und Klärschlamm, oder physikalische Vorgänge wie die Abtrennung von kleinen Teilchen oder Mischen.

Im folgenden sollen Wirbelschichtverfahren zur Behandlung von Katalysatoren, Initiatoren, Katalysatorträgem, Initiatorträgem und von mit Initiatoren oder Katalysatoren behandelten Trägermaterialien betrachtet werden. Obwohl streng definitionsgemäß zwischen Initiatoren und Katalysatoren differenziert werden muß, sind nachstehend unter Katalysatoren auch Initiatoren zu verstehen (häufig ist nur schwer erkennbar, ob eine Reaktion initiert oder katalysiert wird). Entsprechend werden im folgenden mit aktiven Komponenten - zum Beispiel Katalysatoren - behandelte Trägermaterialien auch als Katalysatoren bezeichnet.

Zur Behandlung von Katalysatorträgem oder Katalysatoren (zum Beispiel für deren Einsatz in der Olefinpolymerisation), werden Wirbelschichtreaktoren verwendet, bei denen die Partikeln durch einen nach oben gerichteten Gasstrom bewegt werden, mit dem diese in intensivem Stoff- und Wärmeaustausch stehen. Im zeitlichen Verlauf des Prozesses werden die Partikeln aufgeheizt und unterliegen einer physikalisch/chemischen Veränderung. Nach Beendigung der Umwandlung werden die Partikeln abgekühlt und aus dem Reaktor entladen. Besondere Aufmerksamkeit legt man bei der Gestaltung der Reaktoren auf die:
A) Gasverteilung am Eintritt
B) Abscheidung von feinen Partikeln aus dem Gasstrom, der den Reaktor verläßt
C) Entladevorrichtung

### zu A) (Gasverteilung)

Zur Verteilung des Gases werden flache, gewölbte oder geneigte Bleche in den unteren Bereich des Reaktors eingesetzt, wobei die Bleche mit verschiedenartigen Durchlässen für das Gas versehen sind. Diese Durchlässe sind im einfachsten Fall Bohrungen, können aber auch geeignete Einsätze sein, z.B. Glocken oder Schrauben. Zur zuverlässig gleichmäßigen Verteilung des Gases benötigt ein solcher Gasverteilerboden einen Druckverlust zwischen mindestens 10 und 20 mbar. Eine vorteilhafte Verteilung des Gases kann dadurch behindert werden, daß die Durchlässe für das Gas durch die Partikeln verstopfen.

Bei manchen Schüttungen, bestehend aus Partikeln bestimmter Materialien und Größe, wird bei der Einleitung von Gas in einen der beschriebenen Reaktoren das Phänomen der Kanalbildung beobachtet. Dabei bildet sich keine Wirbelschicht aus, sondern das Gas strömt durch die Durchlässe des Blechs senkrecht nach oben durch die Schüttung hindurch. Auch bei Erhöhung der Strömungsgeschwindigkeit des Gases verharren dann die Partikeln in der Schüttung.

Die Verteilung des Gases spielt auch bei der Behandlung von Partikeln mit Flüssigkeiten, die in die Wirbelschicht eingesprüht werden, ein Rolle. Diese Flüssigkeiten können z.B. als Binder für die Partikeln fungieren, welche so agglomerieren und während des Trocknens größere Agglomerate bilden. Eine optimale Verteilung der eingesprühten Flüssigkeit durch das Wirbelgas ist entscheidend, um einerseits die Agglomeration fester Teilchen und andererseits die Belagbildung an den Reaktorwänden durch Anlagerung von Feststoff zu vermeiden [Daizo Kunii, Octave Levenspiel, "Fluidization Engineering", Verlag Butterworth-Heinemann (Stoneham), zweite Auflage (1991), Seite 24].

### zu B) (Abscheidung)

Am Auslaß des Reaktors wird das Gas über ein geeignetes Abscheideorgan geführt, mit dem man mitgerissene Partikeln abtrennt, um diese im Reaktor zu halten. Solche Abscheideorgane können Filterelemente sein, die direkt in den Reaktionsraum eingehängt werden. Der Nachteil dieser Filterelemente besteht darin, daß diese verstopfen und deshalb regelmäßig gereinigt oder ausgewechselt werden müssen. Vorteilhaft ist der Einsatz von einem Zyklonabscheider, der im wesentlichen wartungsfrei ist und im Gegensatz zu einem Filter die Fähigkeit hat, sehr feine Partikeln aus dem Reaktor herauszulassen und gröbere Partikeln zuverlässig zurückzuhalten. Diese Eigenschaft kann sich positiv auf die Qualität des erzeugten Wirbelgutes auswirken, da sehr feine Partikeln in einer späteren Anwendung oft unerwünscht sind. Kleinste Katalysatorteilchen können beispielsweise bei späteren Polymerisationen unerwünschte sogenannte hot-spots hervorrufen.

### Zu C) (Entladen)

Katalysator oder Katalysatorträger werden nach Abschluß der Behandlung über geeignet zu sperrende Ventile aus dem Reaktor entladen. Die Öffnungen sind dabei in den Boden eingelassen, um den Anteil der im Reaktor verbleibenden Partikeln zu minimieren. Notwendigerweise müssen Katalysator oder Katalysatorträger beim Entladevorgang die Durchlässe des Gasverteilerbodens passieren. Dabei sollte das Gas weiter durch den Boden strömen können, um die Beweglichkeit der Partikeln sicherzustellen (letztere "rutschen" nicht selbständig zum Auslaß, so daß die Benutzung des Wirbelgases während der Entleerung notwendig ist). Der Einsatz von Wirbelgas während der Entleerung behindert jedoch die vorteilhafte Verwendung eines Zyklonabscheiders:

Während des Entleerens sinkt der Stand des Wirbelbettes bis unterhalb des Ablaufrohrendes des Zyklons, und aufgrund der dadurch entstehenden Kurzschlußgase wird die Abscheideleistung des Zyklons stark herabgesetzt, so daß auch gröbere Partikeln aus dem Reaktor herausgetragen werden. Dies führt zwangsläufig zu Materialverlust.

Ein weiterer Nachteil besteht darin, daß vorstehend beschriebene Reaktoren nicht vollständig entleert werden können, da auf den Böden stets Material verbleibt. Die Rückstände werden zusammen mit frischen Partikeln einem zweiten Durchgang unterworfen, so daß Material erzeugt wird, das unterschiedliche Verweilzeiten aufweist. Solches ist in der Regel von ungleichmäßiger, meist schlechterer Qualität als Material, das einheitliche Verweilzeiten aufweist.

Der Erfindung liegt deshalb die Aufgabe zugrunde, das vorstehend beschriebene. Wirbelschichtverfahren zur Behandlung von Katalysatoren oder Katalysatorträgern so zu verbessern, daß keine Kanalbildung erfolgt, eine vorteilhafte Anwendung eines Zyklons möglich ist und eine zügige und zumindest nahezu vollständige, d.h. rückstandsfreie Entladung des Reaktors erfolgt.

Die Lösung dieser Aufgabe ist dann ein Verfahren zur Aktivierung und/oder Kalzinierung von Katalysatoren, die als Aktivkomponente Übergangsmetalle wie Cr oder Ti enthalten, oder Katalysatorträgern, die als Trägermaterial oxidische Verbindungen enthalten, für die Polymerisation von Olefinen durch
a) Einleitung und Verteilung von Gas in den unteren Bereich eines Katalysator- oder Katalysatorträger-Schüttgut enthaltenden Reaktors,
b) Ausbildung einer Wirbelschicht im Reaktor,
c) Behandlung der Katalysator- oder Katalysatorträger-Partikeln in der Wirbelschicht und
d) nahezu rückstandsfreie Entladung des Reaktors,
wobei ein sich nach unten verjüngender Reaktorboden eingesetzt wird.

In einer bevorzugten Ausführungsform wird zur Entfernung feinerer und/oder Zurückhaltung gröberer Partikeln ein Abscheideorgan eingesetzt.

Erfindungsgemäß wird auch eine Vorrichtung zur Durchführung dieses letzteren Verfahrens bereitgestellt, wobei diese folgende Einrichtungen enthält:
i) einen Reaktormantel mit einem sich nach unten verjüngenden, bevorzugt konisch ausgebildeten Reaktorboden,
ii) ein unterhalb des Reaktorbodens befindliches Rohr zur Gaseinleitung in den Reaktor, das mit einem Gaseinlaßrohr für den Gaseingang verbunden ist, wobei der Winkel β, der zwischen dem Gaseinlassrohr des Gaseingangs (7) und der Vertikalen nach oben gemessen wird, 20° - 70° beträgt,
iii) eine unterhalb des Reaktorbodens befindliche Vorrichtung zur Entladung des Reaktors und
iv) ein oder mehrere Abscheideorgane.

Die erfinderische Lösung, für die Gasverteilung beim zugrundeliegenden Wirbelschichtverfahren einen sich nach unten verjüngenden Reaktorboden bereitzustellen, beruht vermutlich darauf, daß überraschenderweise die zu behandelnden Partikeln bei dem Verfahren kaum beschädigt oder desaktiviert werden. Mit sich nach unten verjüngenden Reaktorböden sind solche gemeint, deren Querschnittsfläche sich nach unten reduziert. Prinzipiell kommen symmetrische und unsymmetrische Formen in Frage. Geeignet ist zum Beispiel ein Pyramidenstumpf, insbesondere aber ein Kegelstumpf - also ein konisch ausgebildeter Reaktorboden. Bei Verwendung dieser sich nach unten verjüngenden Reaktorböden liegt neben der Wirbelschicht stets eine im unteren Bereich des Bodens befindliche, die Mantelinnenseite umgebende Schüttung vor. In dieser findet laufend ein Austausch von Material statt, wobei Partikeln der Wirbelschicht auf die Schüttung gelangen und andererseits durch "Abrutschen" von Partikeln in den Gaseinleitungsbereich Material aus der Schüttung abgeführt und der Wirbelschicht wieder zugeführt wird. Durch die Wärmeübertragung von der Reaktorwand auf die Schüttung können in letzterer unerwünscht hohe Temperaturen auftreten. Mögliche Folgen wären z.B. Desaktivierung des Katalysators oder Sintervorgänge, durch die Agglomerate entstehen und/oder die Poren des Katalysators oder des Katalysatorträgers verstopfen.

Diese Nachteile treten bei dem erfindungsgemäßen Verfahren nicht oder kaum auf - möglicherweise deshalb, da sich die Katalysator-Partikeln nur sehr kurzzeitig in der Schüttung aufhalten.

Vorteilhaft wirkt sich die Schüttung dadurch aus, daß Kanalbildung verhindert wird (das laufende Abrutschen von Partikeln an der Mantelwandung würde jeden "Kanal" sofort verschließen). Außerdem begünstigt die Schüttung aufgrund ihrer kegelförmigen Struktur die gleichmäßige Verteilung des Wirbelgases.

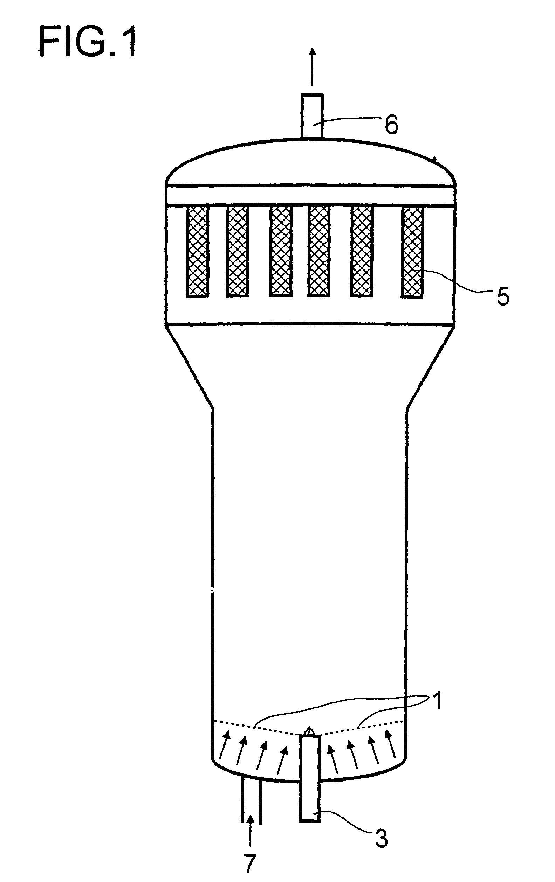

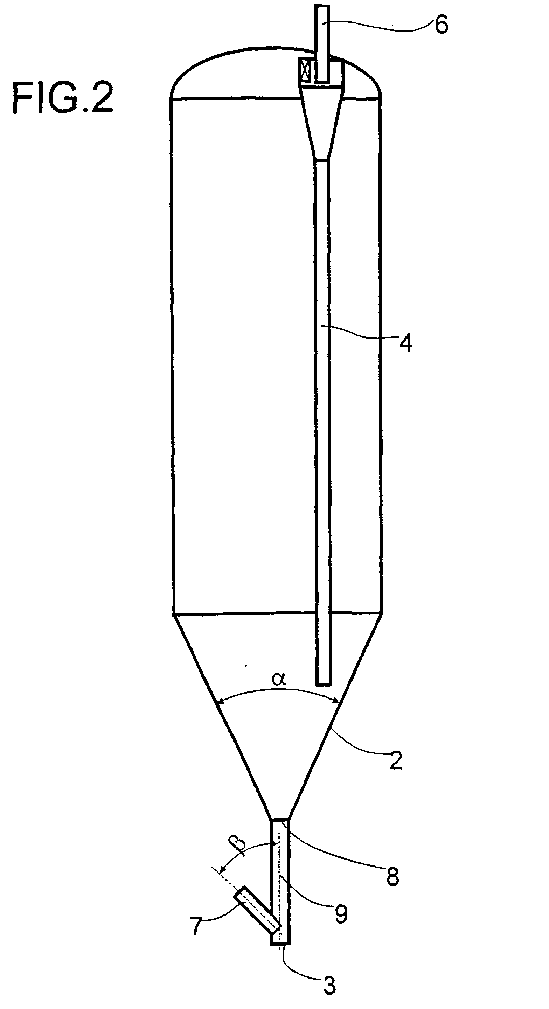

In der anliegenden Zeichnung sind dargestellt, in Fig. 1 ein Gasverteilerboden 1, eine Vorrichtung zur Entladung des Reaktors 3, Filterelemente 5, ein Gasauslaß 6, ein Gaseingang 7 und in Fig. 2 ein Reaktorboden 2, eine Vorrichtung zur Entladung des Reaktors 3, ein Zyklon 4, ein Gasauslaß 6, eine Gaseingang 7, ein Konusstumpf 8, ein Rohr zur Gaseinleitung in den Reaktor 9 ein Konuswinkel α und ein Winkel β.

Da der erfindungsgemäße Reaktor (Fig. 2) im Gegensatz zu dem bisher überlicherweise verwendeten Reaktortyp (Fig.1) keinen Gasverteilerboden 1 aufweist, entfällt einerseits der Druckverlust, der damit verbunden wäre, und andererseits vereinfacht sich die Entleerung des Reaktors, die ohne die Aufstellung von Wirbelgas erfolgt. Der konisch ausgebildete Reaktorboden 2 ermöglicht es, Katalysator bzw. Katalysatorträger mit größerer Effizienz aus dem Reaktor auszuschleusen, da dieser an der Wandung abrutscht und vollständig oder nahezu vollständig zur Entladevorrichtung 3 gelangt, ohne größere Rückstände im Reaktor zu hinterlassen. Die Entladung des Reaktors kann somit rückstandsfrei oder nahezu rückstandsfrei (d.h. zu mindestens 99%, bevorzugt zu mindestens 99,5% erfolgen). Es ist vorteilhaft, wenn der konische Reaktorboden 2 des Reaktors einen zwischen beiden inneren Mantelflächen gemessenen Konuswinkel α von 10° bis 120°, bevorzugt von 30° bis 80° aufweist. Die Enladevorrichtung 3 (zum Beispiel ein Rohr) befindet sich in der Regel am unteren Ende des Rohrs 9, das zur Gaseinleitung in den Reaktor dient. Damit erfüllt auch das Rohr 9 teilweise eine Funktion zur Enladung des Reaktors. Die Entladung erfolgt in der Regel deutlich schneller als bei entsprechenden Reaktoren, die einen Gasverteilerboden 1 aufweisen.

Zur Abscheidung mitgerissener Partikeln kann der Kopf des Reaktors eine Querschnittserweiterung aufweisen. Zusätzliche Abscheideorgane können insbesondere im Bereich dieser Erweiterung angebracht werden.

Ein weiterer wesentlicher Vorteil des erfindungsgemäßen Reaktors ist, daß als Abscheideorgan vorteilhaft ein Zyklon 4 verwendet werden kann, d.h., daß ohne Materialverlust beim Entleeren des Reaktors in Kauf nehmen zu müssen, ein effektiver und zuverlässiger Feingutaustrag ermöglicht wird. Die Nachteile der beim bisher üblicherweise verwendeten Verfahren eingesetzten Filterelemente 5, die sich unterhalb des Gasauslasses 6 befinden, sind einleitend beschrieben worden. Das verwendete Abscheideorgan dient in jedem Fall dazu, feinere Partikeln zu entfernen und/oder gröbere zurückzuhalten.

Von Bedeutung ist auch die Einführung des Trägergases am Gaseingang 7. Da bei der Be- und Entladung möglichst keine Partikeln in den Gaseingang 7 gelangen sollen, sollte das entsprechende Einlaßrohr nach oben geneigt sein. Der Winkel β, der zwischen dem Gaseinlaßrohr des Gaseingangs 7 und der Vertikalen nach .oben gemessen wird, beträgt erfindungsgemäß 20° bis 70°, bevorzugt 30° bis 60°.

Die im erfindungsgemäßen Verfahren behandelten Katalysatoren oder Katalysatorträger werden insbesondere bei der Olefinpolymerisation eingesetzt, wobei die zu behandelnden Partikeln in der Regel in Form von festen Partikeln dem Reaktor zugeführt werden. Solche Polyolefin-Katalysatoren enthalten häufig dotierte Trägermaterialien (zum Beispiel auf der Basis von Kieselgel). Als Aktivkomponenten dienen dabei zum Beispiel Übergangsmetalle wie Chrom oder Titan. Trägermaterialien können beispielsweise oxidische Verbindungen, wie Silika, Alumina, Silika-Alumina, Zirkonia, Thoria, fluoriertes Silika, fluoriertes Alumina, fluoriertes Silika-Alumina, Boroxide oder deren Mischungen sein. Eine zusätzliche Oberflächenmodifikation der Trägermaterialien kann besonders vorteilhaft sein. Die Behandlung der Katalysatoren oder der Katalysatorträger ist in der Regel eine Kalzinierung und/oder Aktivierung.

Während der Behandlung können neben dem durch den Gaseingang 7 eingeführten Trägergas (Wirbelgas) auch zusätzliche Gase und neben den ursprünglich vorgelegten Partikeln auch zusätzlicher Feststoff mit in die Wirbelschicht eingebracht werden. Diese Einbringung kann zu jedem Zeitpunkt des Prozesses und durch an beliebigen Orten angebrachte Zufuhrstellen erfolgen. Als zusätzliche Gase kommen beispielsweise Sauerstoff, Kohlendioxid oder Wasserdampf in Frage, während als zusätzliche Feststoffe beispielsweise Ammoniumhexafluorosilikat, unbehandelter Katalysatorträger oder Katalysatoren anderer physikalisch/chemischer Struktur eingesetzt werden können. Außerdem können auch Flüssigkeiten, beispielsweise Wasser, in die Wirbelschicht eingesprüht werden. Somit können Flüssigkeiten, zusätzliche Feststoffe und/oder zusätzliche Gase mit in den Reaktor eingebracht werden.

Im folgenden wird die Behandlung gemäß dem erfindungsgemäßen Verfahren anhand von Ausführungsbeispielen näher beschrieben.

### Beispiel 1 (Kalzinierung)

In einem Reaktor aus Stahl mit einer Gesamthöhe von 4 m, 0,3 m Durchmesser (zylindrisch), einem Konuswinkel von 45° und einem lichten Durchmesser des am Konusstumpf 8 angebrachten Rohres 9 von 25 mm wurden 25 kg Katalysatorträger mit einem Schüttgewicht von 450 kg/m³ und einer Partikelgrößenverteilung gemäß Tabelle 1 behandelt. Dabei wurde der Reaktor über 6 Stunden von Umgebungstemperatur auf 600°C aufgeheizt, wobei N₂ als Wirbelgas benutzt wurde. Anschließend wurde der Reaktor 10 Stunden auf dieser Temperatur gehalten und danach abgekühlt. Die auf das leere Rohr bezogene Geschwindigkeit im zylindrischen Reaktorteil betrug dabei zwischen 4 cm/s und 8 cm/s. Nach dem Ende des Vorgangs wurde das Wirbelgas abgestellt und der Katalysatorträger abgelassen.
Nach dem Entleerungsvorgang verblieben ca. 0,05 kg Katalysatorträger (d.h. ca. 0,2%) im Reaktor, der an der Wandung als Staubbelag anhaftete.

**Tabelle 1**

| Materialeigenschaften des Kieselgels ES70X® | |
|---|---|
| Test | |
| Porenvolumen | 1.69 cc/g |
| Oberfläche | 320 m²/g |
| flüchtige Anteile | 7.0% |
| Soda (als Na₂O) | 500 ppm |
| Schüttdichte | 300 g/l |
| Partikelgrößenverteilung des Kieselgels ES70X® (Hersteller Crosfield Catalysts) vor und nach der Kalzinierung | |

| Material | Behandlung | Median µm | < 20,2 µm | < 32 µm | > 80,7µm |
|---|---|---|---|---|---|
| ES70X® (Silikat mit ca. 99,3% SiO₂) | unbehandelt | 40.0 | 1.0 | 18.5 | 0.2 |
| | 10 h ausheizen bei 600 °C und N₂ | 40.5 | 1.1 | 19.1 | 0.1 |
| (Meßmethode: Coulter Counter, Vorbehandlung: 30 sec Ultraschall, Elektrolyt: 49.5 % Wasser, 49.5 % Glycerin, 1% NaCl, Kapillare: 560 µm, Betriebsart: manuell) | | | | | |

### Beispiel 2 (Aktivierung)

In einem Reaktor aus Stahl mit einer Gesamthöhe von 5 m, 0,6 m Durchmesser (zylindrisch), einem Konuswinkel von 45° und einem lichten Durchmesser des am Konusstumpf 8 angebrachten Rohres 9 von 51 mm wurden 200 kg Katalysator mit einem Schüttgewicht von 420 kg/m³ und einer Partikelgrößenverteilung gemäß Tabelle 2 aktiviert. Dabei wurde der Apparat über 10 Stunden von Umgebungstemperatur auf 705°C aufgeheizt, wobei Luft als Wirbelgas benutzt wurde. Anschließend wurde der Apparat für 10 Stunden auf dieser Temperatur gehalten und danach abgekühlt. Während der Abkühlphase wurde auf Stickstoff als Wirbelgas umgestellt. Die auf das leere Rohr bezogene Geschwindigkeit im zylindrischen Reaktorteil betrug dabei 5 cm/s - 10 cm/s. Nach dem Ende des Vorgangs wurde das Wirbelgas abgestellt und der Katalysator abgelassen. Nach dem Entleerungsvorgang verblieben ca. 0,1 kg Katalysator (d.h. etwa 0,05%) im Reaktor.

### Vergleichsbeispiel V2 (Aktivierung)

In einem Reaktor mit 5,5 m Gesamthöhe, einem Durchmesser von 0,6 m und einem horizontalen Gasverteilerboden mit zylindrischen Bohrungen (Lochblech), wurden 125 kg Katalysator des Typs aus Beispiel 2 aktiviert. Dabei wurde der Apparat 10 Stunden von Umgebungstemperatur auf 705°C aufgeheizt, wobei Luft als Wirbelgas benutzt wurde. Anschließend wurde der Apparat für 10 Stunden auf dieser Temperatur gehalten und danach abgekühlt. Während der Abkühlphase wurde auf Stickstoff als Wirbelgas umgestellt. Die auf das leere Rohr bezogene Geschwindigkeit im zylindrischen Reaktorteil betrug dabei 5 cm/s - 10 cm/s. Nach dem Ende des Vorgangs wurde der Katalysator über ein zentral angebrachtes Auslaßrohr abgelassen. Nach dem Entleervorgang verblieben 5,2 kg (d.h. etwa 4%) auf dem Verteilerboden.

**Tabelle 2**

| Materialeigenschaften des Katalysators Sylopol 969 IDW® | | |
|---|---|---|
| Test | Kaufware | nach der Aktivierung |
| Porenvolumen cc/g | 1.24 | 1.24 |
| Oberfläche m²/g | 316 | nicht bestimmt |
| flüchtige Anteile, % | 6.1 | nicht bestimmt |
| Na₂O, % | 0.08 | nicht bestimmt |
| Test | Kaufware | nach der Aktivierung |
| Schüttdichte, g/l | nicht bestimmt | 329 |
| Partikelgrößenverteilung des Katalysators Sylopol 969 IDW® (Hersteller Grace GmbH) vor und nach der Aktivierung. | | |

| Material | Behandlung | Median µm | < 20,2 µm | < 32 µm | > 80,7µm |
|---|---|---|---|---|---|
| Sylopol 969 IDW® (Silikat mit ca. 98% SiO₂ und ca. 1% Cr) | unbehandelt | 56.2 | 0.8 | 8.3 | 14.1 |
| | 10 h ausheizen bei 705 °C | 51.5 | 0.8 | 9.0 | 5.8 |
| (Meßmethode: Coulter Counter, Vorbehandlung: 30 sec Ultraschall, Elektrolyt: 49.5 % Wasser, 49.5 % Glycerin, 1% NaCl, Kapillare: 560 µm, Betriebsart: manuell) | | | | | |

## Patentansprüche

1. Verfahren zur Aktivierung und/oder Kalzinierung von Katalysatoren, die als Aktivkomponente Übergangsmetalle wie Chrom oder Titan enthalten, oder Katalysatorträgern, die als Trägermaterial oxidische Verbindungen enthalten, für die Polymeristion von Olefinen durch
a) Einleitung und Verteilung von Gas in den unteren Bereich eines Katalysator- oder Katalysatorträger-Schüttgut enthaltenden Reaktors,
b) Ausbildung einer Wirbelschicht im Reaktor,
c) Behandlung der Katalysator- oder der Katalysatorträger-Partikeln in der Wirbelschicht und
d) nahezu rückstandsfreie Entladung des Reaktors,
wobei ein sich nach unten verjüngender Reaktorboden (2) eingesetzt wird.

2. Verfahren nach Anspruch 1, **dadurch gekennzeichnet, daß** zusätzlich zur Entfernung feinerer und/oder Zurückhaltung gröberer Partikeln ein oder mehrere Abscheideorgane eingesetzt werden.

3. Verfahren nach Anspruch 2, **dadurch gekennzeichnet, daß** als Abscheideorgan(e) ein oder mehrere Zyklone (4) verwendet werden.

4. Verfahren nach einem der Ansprüche 1 bis 3, **dadurch gekennzeichnet, daß** auch Flüssigkeiten und/oder zusätzliche Feststoffe und/oder zusätzliche Gase in die Wirbelschicht eingebracht werden.

5. Reaktor zur Durchführung des Verfahrens nach einem der Ansprüche 1 bis 4, enthaltend folgende Einrichtungen:
i) einen Reaktormantel mit einem sich nach unten verjüngenden, bevorzugt konisch ausgebildeten Reaktorboden (2),
ii) ein unterhalb des Reaktorbodens (2) befindliches Rohr (9) zur Gaseinleitung in den Reaktor, das mit einem Gaseinlaßrohr für den Gaseingang (7) verbunden ist, wobei der Winkel β, der zwischen dem Gaseinlassrohr des Gaseingangs (7) und der Vertikalen nach oben gemessen wird, 20° - 70° beträgt,
iii) eine unterhalb des Reaktorbodens befindliche Vorrichtung zur Entladung des Reaktors (3) und
iv) ein Abscheideorgan.

6. Reaktor nach Anspruch 5, **dadurch gekennzeichnet, daß** der sich nach unten verjüngende Reaktorboden (2) konisch ausgebildet ist.

7. Reaktor nach Anspruch 6, **dadurch gekennzeichnet, daß** der konisch ausgebildete Reaktorboden (2) einen zwischen den beiden inneren Mantelflächen gemessenen Konuswinkel α von 10° - 120°, bevorzugt von 30° - 80° aufweist.

8. Reaktor nach einem der Ansprüche 5 bis 7, **dadurch gekennzeichnet, daß** der Winkel β, der zwischen dem Gaseinlaßrohr des Gaseingangs (7) und der Vertikalen nach oben gemessen wird, 30° - 60° beträgt.

9. Reaktor nach einem der Ansprüche 5 bis 8, **dadurch gekennzeichnet, daß** als Abscheidorgan ein Zyklon eingesetzt wird.

## Claims

1. A process for activating and/or calcining olefin polymerization catalysts which contain transition metals such as chromium or titanium as an action component or catalyst supports which contain oxidic compounds as a support material by
a) introducing and distributing gas in the lower region of a reactor containing a layer of catalyst or catalyst support,
b) forming a fluidized bed in the reactor,
c) treating the catalyst or catalyst support particles in the fluidized bed, and
d) emptying the reactor virtually residue-free, use being made of a downwardly tapering reactor base (2).

2. A process as claimed in claim 1, wherein one or more separators are employed in addition, to remove fines and/or to hold back coarse particles.

3. A process as claimed in claim 2, wherein one or more cyclones (4) are employed as separator(s).

4. A process as claimed in one of claims 1 to 3, wherein liquids and/or additional solids and/or additional gases are introduced into the fluidized bed.

5. A reactor for carrying out a process as claimed in one of claims 1 to 4, comprising the following devices:
i) a reactor jacket having a downwardly tapering, preferably conical, reactor base (2),
ii) a pipe (9) for introducing gas into the reactor located beneath the reactor base (2) and connected to a gas inlet pipe for gas introduction (7), the angle β measured between the gas inlet pipe of the gas inlet (7) and the upward vertical being 20° - 70°,
iii) a device for emptying the reactor (3) located beneath the reactor base, and
iv) a separator.

6. A reactor as claimed in claim 5, wherein the downwardly tapering reactor base (2) is conical.

7. A reactor as claimed in claim 6, wherein the conical reactor base (2) has a cone angle α, measured between the two internal jacket surfaces, of 10° - 120°, preferably 30° - 80°.

8. A reactor as claimed in one of claims 5 to 7, wherein the angle β measured between the gas inlet pipe of the gas inlet (7) and the upward vertical is 30° - 60°.

9. A reactor as claimed in one of claims 5 to 8, wherein the separator employed is a cyclone.

## Revendications

1. Procédé d'activation et/ou de calcination de catalyseurs contenant des métaux de transition tels que le chrome ou le titane comme composant actif, ou de supports de catalyseurs contenant des composés oxydiques comme matériau support, pour la polymérisation d'oléfines par
a) introduction et répartition de gaz dans la partie inférieure d'un réacteur contenant du catalyseur ou du support de catalyseur en vrac,
b) formation d'un lit fluidisé dans le réacteur,
c) traitement des particules de catalyseur ou de support de catalyseur dans le lit fluidisé, et
d) déchargement du réacteur presque sans laisser de résidus, un fond de réacteur à section décroissante (2) vers le bas étant utilisé.

2. Procédé selon la revendication 1, **caractérisé en ce que** un ou plusieurs organes de séparation sont utilisés en plus de l'élimination des particules les plus fines et/ou de la conservation des particules les plus grossières.

3. Procédé selon la revendication 2, **caractérisé en ce que** un ou plusieurs cyclone(s) est(sont) utilisé(s) comme organe(s) de séparation.

4. Procédé selon l'une quelconque des revendications 1 à 3, **caractérisé en ce que** des liquides et/ou des solides supplémentaires et/ou des gaz supplémentaires sont également introduits dans le lit fluidisé.

5. Réacteur pour la mise en oeuvre du procédé selon l'une quelconque des revendications 1 à 4, contenant les dispositifs suivants :
i) une enveloppe de réacteur avec un fond de réacteur à section décroissante vers le bas, de préférence en forme de cône (2),
ii) un tube (9) se trouvant sous le fond du réacteur (2), pour l'introduction de gaz dans le réacteur, relié à un tube d'admission du gaz pour l'entrée du gaz (7), l'angle β, mesuré entre la verticale vers le haut et le tube d'admission du gaz pour l'entrée du gaz (7), étant compris entre 20 et 70°.
iii) un dispositif se trouvant sous le fond du réacteur pour le déchargement de ce dernier (3), et
iv) un organe de séparation.

6. Réacteur selon la revendication 5, **caractérisé en ce que** le fond de réacteur (2) à section décroissante vers le bas est de forme conique.

7. Réacteur selon la revendication 6, **caractérisé en ce que** le fond de réacteur (2) de forme conique présente un angle α compris entre 10 et 120°, de préférence entre 30 et 80°, mesuré entre les deux surfaces intérieures de l'enveloppe.

8. Réacteur selon l'une quelconque des revendications 5 à 7, **caractérisé en ce que** l'angle β, mesuré entre la verticale vers le haut et le tube d'admission du gaz pour l'entrée du gaz (7), est compris entre 30 et 60°.

9. Réacteur selon l'une quelconque des revendications 5 à 8, **caractérisé en ce que** l'organe de séparation utilisé est un cyclone.
